# EUROPEAN PATENT SPECIFICATION

(11) **EP 2 221 197 B1**
(45) Date of publication and mention of the grant of the patent: **14.03.2012**
(21) Application number: 10152901.4
(22) Date of filing: 08.02.2010
(51) Int. Cl.: B60H 1/00

(54) **Air vent control system for a vehicle**
Belüftungssystem für Fahrzeuge
Système de contrôle d'aération pour véhicule

(30) Priority: 20.02.2009 US 390050
(43) Date of publication of application: 25.08.2010
(73) Proprietor: DEERE & COMPANY, Moline, Illinois 61265-8098 (US)
(72) Inventor: Bruss, Paul T, Cedar Falls, IA 50613 (US)
(74) Representative: Dehnhardt, Florian Christopher

(56) References cited:
- EP-A2- 2 018 984
- FR-A1- 2 762 889
- US-A1- 2003 037 918
- US-A1- 2005 005 532

## Description

The present invention relates to an air vent control system for a vehicle.

It has been proposed to place vehicle heating, ventilation and air conditioning (HVAC) systems in the roofs of vehicles, such as tractors. Roof HVAC system designs are described in US patent no. 6,780,097, issued 24 Aug. 2004, and in patent application serial no. 11/518,050, filed 8 Sep. 2006 (attorney docket no. 17652-US), both assigned to the assignee of the present application US 2005/0005532 discloses an air vent control system according to the preamble of claim 1. In order to keep the height of the HVAC system as low as possible, the components of the system must be spread out across much of the roof area. Conditioned air from such an HVAC system blows into the vehicle cab through several vents formed in the roof. Each vent may have adjustable louvers so that airflow through each vent may be controlled individually. Some of the vents may be positioned at a distance from the operator which prevents comfortably reaching the vents to adjust the louvers. It is desired to provide an air vent control system which allows an operator to easily adjust air flow through vents which are in a remote position.

Accordingly, an object of this invention is to provide an air vent control system which allows an operator to easily adjust air flow through vents which are in a remote position.

This and other objects are achieved by the present invention, wherein an air vent control system for a vehicle comprises an inner roof panel forming a portion of a chamber for receiving conditioned air. The inner roof panel includes at least one left air vent and at least one right air vent. A plurality of walls forms at least one left port and at least one right port, wherein the at least one left port communicating with the at least one left vent, and the at least one right port communicating with the at least one right vent. A mode control unit comprises a left door unit and a right door unit, both door units mounted for rotation on the inner roof panel. Each door unit has a louver door and a gear member connected thereto, the louver door of the left door unit being rotatable to control airflow through the at least one left port, the louver door of the right door unit being rotatable to control airflow through the at least one right port, the gear members being in meshing engagement with each other so that the door units operate symmetrically with respect to each other.

For a complete understanding of the objects, techniques, and structure of the invention reference should be made to the following detailed description and accompanying drawings, wherein similar components are designated by identical reference numerals:
- Fig. 1: is a perspective top view of an inner roof panel with an air vent control system according to the present invention,
- Fig. 2: is an exploded top perspective view of a portion of the air vent control system according to Fig. 1,
- Fig. 3: is a bottom perspective view of the air vent control system according to Fig. 1 with the inner roof panel removed,
- Fig. 4: is a bottom perspective detailed view according to Fig. 3 showing a cam mem- ber and a detent spring member, and
- Fig. 5: is a perspective view of an operator rotatable actuator for use with the air vent control system according to Fig. 1.

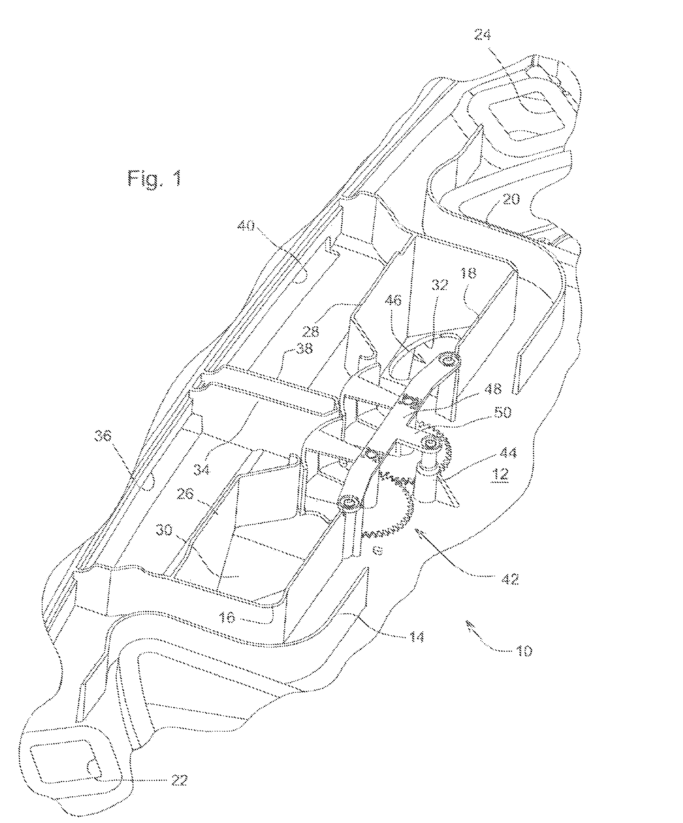

Referring to Fig. 1, there is shown an air vent control system comprising an inner roof panel 10 for a cab of a vehicle, such as a tractor. A central region of an upper side of the inner roof panel 10 forms a portion of a chamber 12 which receives conditioned air from a vehicle heating, ventilation and air conditioning (HVAC) system. Walls 14 and 16 direct conditioned air to a left floor opening 22 which is connected to a left cab floor vent by conduits. Walls 18 and 20 direct conditioned air to a right floor opening 24 which is connected to a right cab floor vent by conduits.

Walls 16 and 26 direct air to a left air conditioned (AC) vent 30. Walls 18 and 28 direct air to a right air conditioned (AC) vent 32. Walls 16, 26 and 34 direct air to a left windshield defogger vent 36. Walls 18, 28 and 38 direct air to a right windshield defogger vent 40. Walls 34 and 38 preferably extend in a fore-and-aft direction and are symmetrical about a central fore-and-aft plane. A mode control unit 42 is mounted on the inner roof panel 10 and controls air flow from chamber 12 to vents 22, 24, 30, 32, 36 and 40. A support post 44 projects from the inner roof panel 10 mid-way between the inner edges of walls 14 and 20. A retainer bracket 46 has a main arm 48 and a branch arm 50. Opposite ends of main arm 48 are mounted on the inner ends of walls 16 and 18. The end of branch arm 50 is supported by support post 44. The walls 14, 16, 18, 20, 26, 28, 34 and 38 are preferably molded with the inner roof panel 10 and form passages to the vents 24, 30, 32, 36 and 40. These passages and vents 24, 30, 32, 36 and 40 make possible four airflow modes for air exiting the forward portion of the vehicle cab - defog, defog/foot, AC, and all. Vents 22, 24, 30, 32, 36 and 40 may be arranged symmetrically about walls 34 and 38.

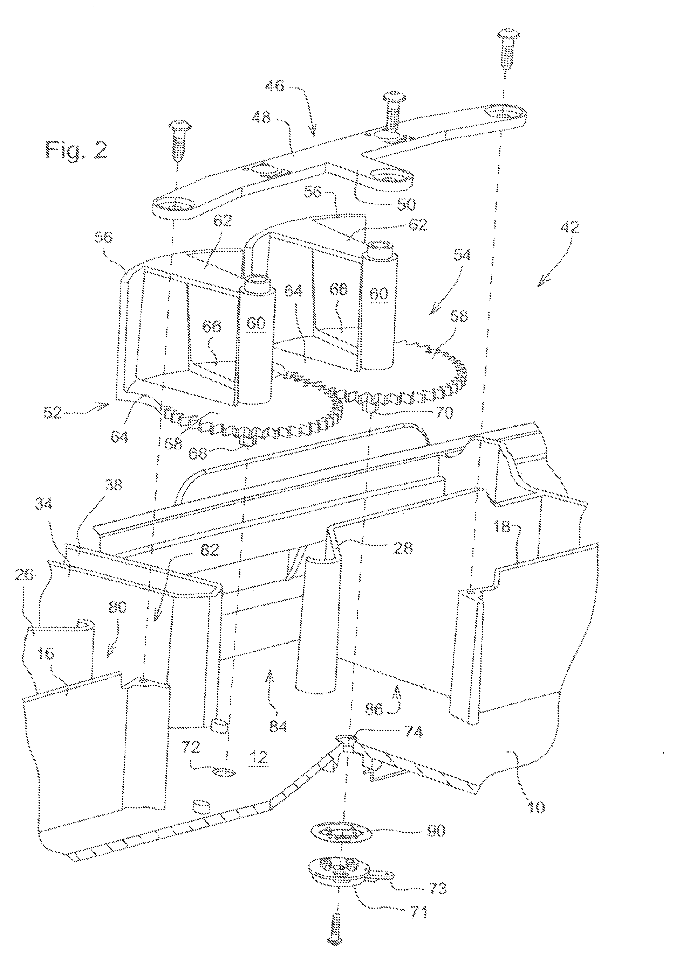

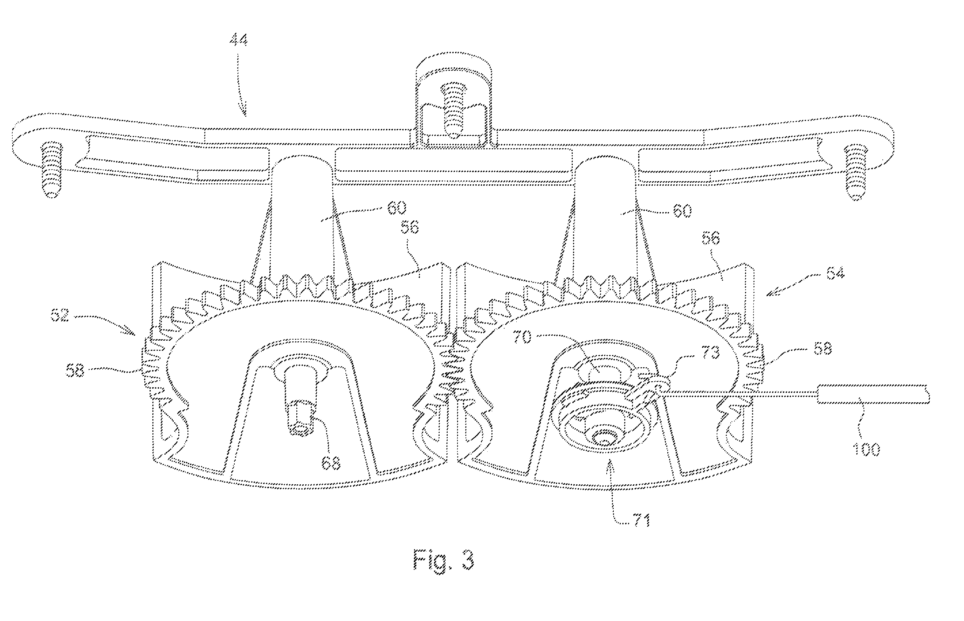

As best seen in Figs. 2 and 3, the mode control unit 42 includes a pair of preferably identical left and right door units 52 and 54 mounted for rotation between the inner roof panel 10 and the retainer bracket 46. Each door unit 52 and 54 includes a louver door 56, a gear member 58, and a pivot pin 60. Each door unit 52 and 54 also includes an upper arm 62 which connects an upper edge of louver door 56 to an upper part of pivot pin 60 and a pair of lower arms 64 and 66 which connect a lower corner of louver door 56 to a lower part of pivot pin 60. A smaller diameter end 68 and 70 of each pivot pin 60 projects through and is rotatably received by a corresponding bore 72 and 74 in the inner roof panel 10. As a result, the door units 52 and 54 are in a clamshell type arrangement where the motion of each door unit 52 and 54 is tied to the other by the gear members 58.

A first left port 80, communicated with left AC vent 30, is formed by the inner ends of walls 16 and 26. A second left port 82, communicated with left windshield defogger vent 36, is formed by the inner ends of walls 26 and 34. A first right port 84, communicated with right windshield defogger vent 40, is formed by the inner ends of walls 38 and 28. A second right port 86, communicated with right AC vent 32, is formed by the inner ends of walls 28 and 18. The left ports 80 and 82 and the right ports 84 and 86 are symmetrical with respect to each other. Left door unit 52 is rotatable about the axis of its pivot pin 60 to control airflow through left ports 80 and 82. Second door unit 54 is rotatable about the axis of its pivot pin 60 to control airflow through right ports 84 and 86. The gear members 58 are in meshing engagement with each other.

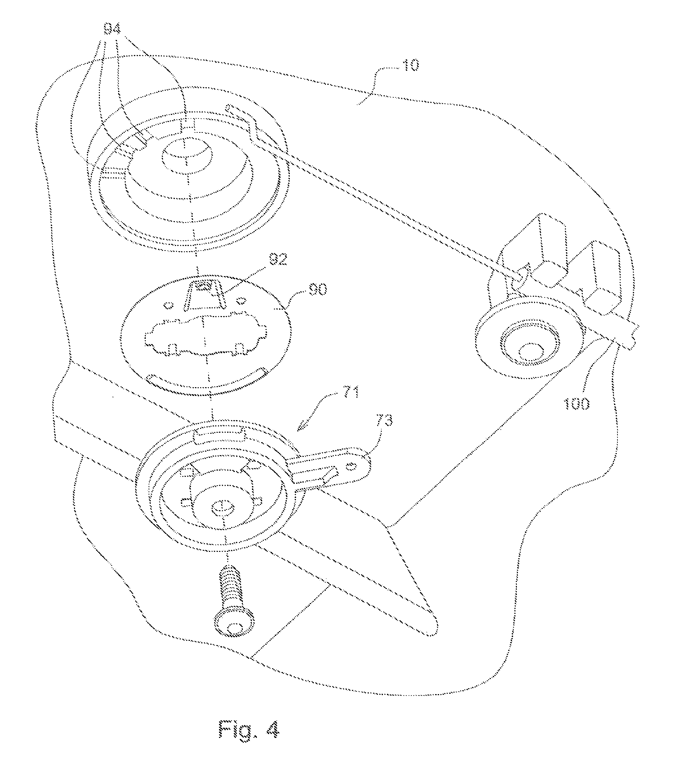

Referring now to Figs. 2 and 4, a cam member 71 is mounted on splines of smaller diameter end 70 so that cam member 71 is non-rotatably coupled to pivot pin 60 of second door unit 54. An arm 73 projects from the round body of cam member 71. A known detent spring member 90 is placed between the cam member 71 and the inner roof panel 10 and is mounted for rotation with the cam member 71. As best seen in Fig. 4, the detent spring member 90 has a detent tab 92 which cooperates in a known manner with detent recesses 94 formed in the bottom surface of inner roof panel 10 to releasable hold the door members 52 and 54 in a plurality of desired positions to open and close the ports 80, 82, 84 and 86.

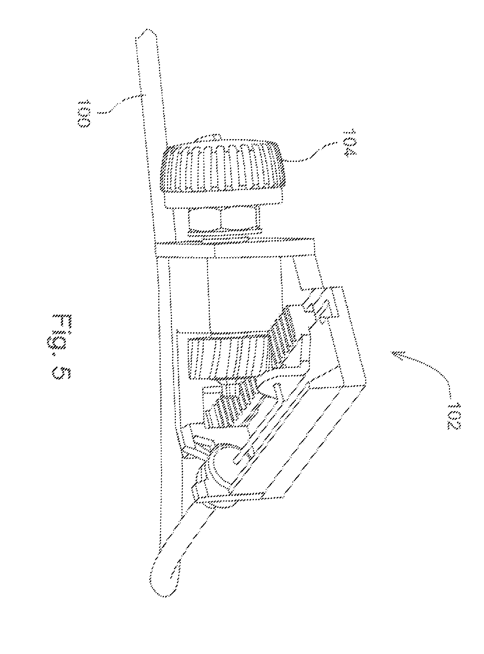

As best seen in Fig. 3, an end of a Bowden type cable 100 is coupled to the arm 73 of cam member 71. As best seen in Fig. 5, the other end of cable 100 is coupled to a known operator rotatable actuator comprising a control knob unit 102 with knob 104 which may be mounted in a location in the vehicle cab so that it may be easily reached and manipulated by an operator of the vehicle. Instead of a mechanical cable, the door units 52 and 54 could be rotated by an electric or hydraulic motor responding to a suitable electric or hydraulic device coupled to the knob 104.

When the operator rotates the knob 104 of control knob unit 102, the cable 100 rotates the cam member 71 and thereby second door unit 54. Because of the meshing engagement of gear members 58, the rotation of right door unit 54 causes left door unit 52 to rotate in the opposite direction, so that the door units 52 and 54 operate symmetrically with respect to each other. With this invention, airflow mode control is provided for vents too far to reach without standing up.

## Claims

1. Air vent control system for a vehicle, comprising an inner roof panel (10) forming a portion of a chamber (12) for receiving conditioned air, the inner roof panel (10) including at least one left air vent (30, 36) and at least one right air vent (32, 40); a plurality of walls (16, 18, 26, 28, 34, 38) which forms at least one left port (80, 82) and at least one right port (84, 86), the at least one left port (80, 82) communicating with the at least one left vent (30, 36), and the at least one right port (84, 86) communicating with the at least one right vent (32, 40); and a mode control unit (42) comprising a left door unit (52) and a right door unit (54), both door units (52, 54) mounted for rotation on the inner roof panel (10), each door unit (52, 54) having a louver door (56) and a gear member (58) connected thereto, the louver door (56) of the left door unit (52) being rotatable to control airflow through the at least one left port (80, 82), the louver door (56) of the right door unit (54) being rotatable to control airflow through the at least one right port (84, 86), **characterised in that** the gear members (58) are in meshing engagement with each other so that the door units (52, 54) operate symmetrically with respect to each other.

2. The control system according to claim 1, **characterized in that** the at least one left and right ports (80, 82, 84, 86) and vents (30, 32, 36, 40) are symmetrical with respect to each other.

3. The control system according to claim 1 or 2, **characterized by** an operator rotatable actuator being operatively coupled to one of the gear members (58) so that operation of the actuator causes rotation of each louver door (56).

4. The control system according to one of claims 1 to 3, **characterized in that** each door unit (52, 54) comprises a pivot pin (60) rotatably mounted to the inner roof panel (10), and a plurality of arms (62, 64, 66) connected to each louver door (56), each gear member (58) being fixed with respect to one of the pivot pins (60).

5. The control system according to claim 4, **characterized in that** a pair of arms (64, 66) connects the louver door (56) to the gear member (58), and one of the arms (62) connects the louver door (56) to the pivot pin (60).

6. The control system according to claim 5, **characterized in that** the pair of arms (64, 66) connects opposite corners of the louver door (56) to the gear member (58), and the one arm (62) connects an edge of the louver door (56) to the pivot pin (60).

7. The control system according to one of claims 4 to 6, **characterized in that** the inner roof panel (10) comprises a pair of spaced apart bores (72, 74) extending therethrough, wherein the pivot pin (60) of each door unit (52, 54) has a smaller diameter end (68, 70) rotatably received by a corresponding one of the bores (72, 74).

8. The control system according to one of claims 4 to 7, **characterized by** a cam member (71) non-rotatably connected to one of the pivot pins (60), the cam member (71) having an arm (73) operatively coupled to an operator rotatable actuator.

9. The control system according to claim 8, **characterized in that** the actuator comprises a control knob unit (102) which is coupled to one of the gear members (58) by a Bowden type cable (100).

## Patentansprüche

1. Lüftungsöffnungsteuersystem für ein Fahrzeug mit einer inneren Dachplatte (10), die einen Abschnitt einer Kammer (12) zur Aufnahme von klimatisierter Luft, wobei die innere Dachplatte (10) mindestens eine linke Lüftungsöffnung (30, 36) und mindestens eine rechte Lüftungsöffnung (32, 40) aufweist, mehreren Wänden (16, 18, 26, 28, 34, 38), die mindestens einen linken Kanal (80, 82) und mindestens einen rechten Kanal (84, 86) bilden, wobei der mindestens eine linke Kanal (80, 82) mit der mindestens einen linken Lüftungsöffnung (30, 36) in Verbindung steht und der mindestens eine rechte Kanal (84, 86) mit der mindestens einen rechten Lüftungsöffnung (32, 40) in Verbindung steht, und einer Modussteuereinheit (42), die eine linke Türeinheit (52) und eine rechte Türeinheit (54) umfasst, wobei beide Türeinheiten (52, 54) zur Drehung an der inneren Dachplatte (10) montiert sind, wobei jede Türeinheit (52, 54) eine Lamellentür (56) und ein damit verbundenes Zahnradelement (58) hat, wobei die Lamellentür (56) der linken Türeinheit (52) zur Steuerung von Luftströmung durch den mindestens einen linken Kanal (80, 82) drehbar ist, wobei die Lamellentür (56) der rechten Türeinheit (54) zur Steuerung von Luftströmung durch den mindestens einen rechten Kanal (84, 86) drehbar ist, **dadurch gekennzeichnet, dass** die Zahnradelemente (58) in kämmendem Eingriff miteinander stehen, so dass die Türeinheiten (52, 54) zueinander symmetrisch arbeiten.

2. Steuersystem nach Anspruch 1, **dadurch gekennzeichnet, dass** der mindestens eine linke und rechte Kanal (80, 82, 84, 86) und Lüftungsöffnungen (30, 32, 36, 40) zueinander symmetrisch sind.

3. Steuersystem nach Anspruch 1 oder 2, **gekennzeichnet durch** ein Stellglied, das von einer Betriebsperson gedreht werden kann und an eines der Zahnradelemente (58) wirkgekoppelt ist, so dass der Betrieb des Stellglieds die Drehung jeder Lamellentür (56) veranlasst.

4. Steuersystem nach einem der Ansprüche 1 bis 3, **dadurch gekennzeichnet, dass** jede Türeinheit (52, 54) einen Drehzapfen (60), der drehbar an der inneren Dachplatte (10) montiert ist, und mehrere Arme (62, 64, 66) umfasst, die mit jeder Lamellentür (56) verbunden sind, wobei jedes Zahnradelement (58) bezüglich eines der Drehzapfen (60) festgelegt ist.

5. Steuersystem nach Anspruch 4, **dadurch gekennzeichnet, dass** ein Paar Arme (64, 66) die Lamellentür (56) mit dem Zahnradelement (58) verbindet und einer der Arme (62) die Lamellentür (56) mit dem Drehzapfen (60) verbindet.

6. Steuersystem nach Anspruch 5, **dadurch gekennzeichnet, dass** das Paar Arme (64, 66) gegenüberliegende Ecken der Lamellentür (56) mit dem Zahnradelement (58) verbindet und einer der Arme (62) einen Rand der Lamellentür (56) mit dem Drehzapfen (60) verbindet.

7. Steuersystem nach einem der Ansprüche 4 bis 6, **dadurch gekennzeichnet, dass** die innere Dachplatte (10) ein Paar beabstandeter Bohrungen (72, 74) umfasst, die sich dort hindurch erstrecken, wobei der Drehzapfen (60) jeder Türeinheit (52, 54) ein Ende (68, 70) mit einem kleineren Durchmesser hat, das drehmäßig von einer entsprechenden der Bohrungen (72, 74) aufgenommen wird.

8. Steuersystem nach einem der Ansprüche 4 bis 7, **gekennzeichnet durch** ein Nockenelement (71), das nicht drehbar mit einem der Drehzapfen (60) verbunden ist, wobei das Nockenelement (71) einen Arm (73) hat, der an ein von einer Bedienperson drehbares Stellglied wirkgekoppelt ist.

9. Steuersystem nach Anspruch 8, **dadurch gekennzeichnet, dass** das Stellglied eine Steuerknopfeinheit (102) umfasst, die über ein bowdenzugartiges Seil (100) an eines der Zahnradelemente (58) gekoppelt ist.

## Revendications

1. Système de commande de bouche d'air pour un véhicule, comprenant un panneau de toit intérieur (10) formant une partie d'une chambre (12) destinée à recevoir de l'air climatisé, le panneau de toit intérieur (10) comportant au moins une bouche d'air gauche (30, 36) et au moins une bouche d'air droite (32, 40) ; une pluralité de parois (16, 18, 26, 28, 34, 38) qui forment au moins un orifice gauche (80, 82) et au moins un orifice droit (84, 86), l'au moins un orifice gauche (80, 82) étant en communication avec l'au moins une bouche d'air gauche (30, 36), et l'au moins un orifice droit (84, 86) étant en communication avec l'au moins une bouche d'air droite (32, 40) ; et une unité de commande de mode (42) comprenant une unité de trappe 141uche (52) et une unité de trappe droite (54), les deux unités de trappe (52, 54) étant montées à rotation sur le panneau de toit intérieur (10), chaque unité de trappe (52, 54) ayant une trappe à claire-voie (56) et un élément d'engrenage (58) relié à cette dernière, la trappe à claire-voie (56) de l'unité de trappe gauche (52) pouvant être pivotée pour réguler le débit d'air à travers l'au moins un orifice gauche (80, 82), la trappe à claire-voie (56) de l'unité de trappe droite (54) pouvant être pivotée pour réguler le débit d'air à travers l'au moins un orifice droit (84, 86), **caractérisé en ce que** les éléments d'engrenage (58) sont en engagement par engrènement l'un avec l'autre de telle sorte que les unités de trappe (52, 54) fonctionnent de manière symétrique l'une par rapport à l'autre.

2. Système de commande selon la revendication 1, **caractérisé en ce que** les au moins un orifices (80, 82, 84, 86) et bouches d'air (30, 32, 36, 40) gauches et droit(e)s sont symétriques les un(e)s par rapport aux autres.

3. Système de commande selon la revendication 1 ou 2, **caractérisé par le fait qu'**un actionneur pouvant être pivoté par un opérateur est accouplé fonctionnellement à l'un des éléments d'engrenage (58) de telle sorte que l'actionnement de l'actionneur provoque la rotation de chaque trappe à claire-voie (56).

4. Système de commande selon l'une quelconque des revendications 1 à 3, **caractérisé en ce que** chaque unité de trappe (52, 54) comprend un axe de pivotement (60) monté rotatif sur le panneau de toit intérieur (10), et une pluralité de bras (62, 64, 66) reliés à chaque trappe à claire-voie (56), chaque élément d'engrenage (58) étant fixe par rapport à l'un des axes de pivotement (60).

5. Système de commande selon la revendication 4, **caractérisé en ce qu'**une paire de bras (64, 66) relie la trappe à claire-voie (56) à l'élément d'engrenage (58), et l'un des bras (62) relie la trappe à claire-voie (56) à l'axe de pivotement (60).

6. Système de commande selon la revendication 5, **caractérisé en ce que** la paire de bras (64, 66) relie des coins opposés de la trappe à claire-voie (56) à l'élément d'engrenage (58), et l'un des bras (62) relie un bord de la trappe à claire-voie (56) à l'axe de pivotement (60).

7. Système de commande selon l'une quelconque des revendications 4 à 6, **caractérisé en ce que** le panneau de toit intérieur (10) comprend une paire d'alésages (72, 74) espacés l'un de l'autre s'étendant à travers ce dernier, l'axe de pivotement (60) de chaque unité de trappe (52, 54) ayant une extrémité de diamètre plus petit (68, 70) reçue de manière rotative par un alésage (72, 74) correspondant.

8. Système de commande selon l'une quelconque des revendications 4 à 7, **caractérisé par** un élément de came (71) relié de manière non rotative à l'un des axes de pivotement (60), l'élément de came (71) ayant un bras (73) accouplé fonctionnellement à un actionneur pouvant être pivoté par un opérateur.

9. Système de commande selon la revendication 8, **caractérisé en ce que** l'actionneur comprend une unité de bouton de commande (102) qui est accouplée à l'un des éléments d'engrenage (58) par un câble de type Bowden (100).
